# EUROPÄISCHE PATENTSCHRIFT

(11) **EP 3 388 267 B1**
(45) Veröffentlichungstag und Bekanntmachung des Hinweises auf die Patenterteilung: **02.06.2021**
(21) Anmeldenummer: 17166249.7
(22) Anmeldetag: 12.04.2017
(51) Int. Cl.: B60J 7/185

(54) **VERSCHLUSSVORRICHTUNG MIT VERSCHLUSSHAKEN UND SCHLITTEN, DER AN EINEM VERSCHLUSSTRÄGER VERFAHRBAR IST**
CLOSURE DEVICE WITH CLOSING HOOK AND CARRIAGE THAT CAN BE DISPLACED ON A SHUTTER HOLDER
DISPOSITIF DE FERMETURE COMPRENANT UN CROCHET DE FERMETURE ET COULISSEAU SE DÉPLAÇANT SUR UN SUPPORT DE FERMETURE

(43) Veröffentlichungstag der Anmeldung: 17.10.2018
(73) Patentinhaber: Webasto SE, 82131 Stockdorf (DE)
(72) Erfinder: Rudolfi, Christian, 82131 Stockdorf (DE); Haberl, Franz, 82131 Stockdorf (DE)
(74) Vertreter: advotec.

(56) Entgegenhaltungen:
- EP-A2- 1 529 908
- WO-A1-2010/017771
- AT-B- 406 661
- DE-A1-102008 003 880
- DE-T2- 69 302 584

## Beschreibung

Die Erfindung betrifft eine Verschlussvorrichtung eines Cabriolet-Verdecks mit den Merkmalen des Oberbegriffs des Patentanspruchs 1 sowie ein Verdeck eines Cabriolet-Fahrzeugs mit einer derartigen Verschlussvorrichtung.

Eine Verschlussvorrichtung der einleitend genannten Art ist aus der Druckschrift DE 10 2010 044 702 A1 bekannt und dient zum Festlegen eines starren Dachelements, das ein Frontspriegel eines Faltverdecks oder ein starres Dachsegment eines Klappdachs bzw. RHT (Retractable Hard Top) sein kann, an einem vorderen Windlauf des betreffenden Fahrzeugs. Diese Verschlussvorrichtung umfasst einen Verschlussträger, der als Gehäuse dient und der mit dem starren Dachelement verbunden werden kann. Ein Verschlusshaken ist um einen in dem Verschlussträger verfahrbaren Lagerzapfen verschwenkbar. Der Verschlusshaken hat einen Hakenabschnitt, der zwischen einer abgesenkten Freigabestellung und einer angehobenen Sperrstellung verstellbar ist, in der der Hakenabschnitt mit einem korrespondierenden Verschlusselement in Eingriff steht, das an dem vorderen Windlauf ausgebildet ist. Zum Verstellen des Verschlusshakens weist die Verschlussvorrichtung eine Antriebseinrichtung auf, mittels der der Lagerzapfen verfahrbar ist, so dass eine Verstellbewegung in den Verschlusshaken eingeleitet wird. Das von einem Antriebsmotor ausgeübte Antriebsmoment wird über eine Lenkeranordnung der Antriebseinrichtung auf einen Kreuzkopf übertragen, an dem der Lagerzapfen des Verschlusshakens gelagert ist und der in entsprechenden Führungsbahnen des Verschlussträgers verfahrbar ist. Bei dieser Verschlussvorrichtung ist die Stellung des Verschlusshakens gegenüber dem Verschlussträger nicht immer eindeutig definiert. Vielmehr ist der Verschlusshaken in Querrichtung bewegbar, da er sich um eine sich in Hochrichtung erstreckende Achse des Kreuzkopfes drehen lässt.

Zudem wird zum Halten des Verschlusshakens ein Magnet eingesetzt, der den Verschlusshaken gegen eine Gleitfläche zieht. Auch ist die Antriebseinrichtung aufwändig ausgelegt, da der Kreuzkopf sowohl oben als auch unten mit einer Antriebslenkeranordnung verbunden ist. Dies geht zu Lasten der Bauhöhe, zu Lasten des Gewichts und schlägt sich auch in den Herstellungskosten der Verschlussvorrichtung nieder. Ferner kann bei dieser Verschlussvorrichtung nur eine Zuziehkraft aufgebaut werden, die sich zwischen dem Lagerzapfen und dem Hakenabschnitt erstreckt. Eine Kraftkomponente, die senkrecht zu dieser Richtung steht, kann nicht aufgebaut werden.

Aus Druckschrift DE 10 2008 003 880 A1 ist eine Verschlussvorrichtung für ein Cabriolet-Verdeck bekannt, bei der ein Verschlusshaken bei einem Antrieb mittels eines Antriebsmotors translatorisch und rotatorisch verlagerbar ist. Der Antriebsmotor wirkt über eine Zahnrad- und Lenkeranordnung auf einen Schlitten, an dem der Verschlusshaken schwenkbar gelagert ist. Ein Führungselement des Verschlusshakens ist in einer Führungskulisse geführt, die an einem Kulissenträger ausgebildet ist.

Aus Druckschrift EP 1 529 908 A2 ist eine Verschlussvorrichtung bekannt, bei der ein Antrieb auf einen Lagerstift wirkt, der zusammen mit einem Antriebshebel verschiebbar an einem Verschlussträger gelagert ist. Der Antriebshebel wirkt über einen Lenker und einen Hebel auf einen Riegelhaken, der seitliche Führungselemente aufweist, die in Führungsschlitzen des Verschlussträgers geführt sind.

Aus Druckschrift DE 693 02 584 T2 ist ein Verschluss für ein Cabriolet-Verdeck bekannt, der einen Verschlusshaken umfasst, der an einem Schlitten schwenkbar gelagert ist. Ein Führungselement des Verschlusshakens ist in Führungskulissen eines Verschlussträgers geführt. Der Schlitten ist an einem Verschlussträger verschiebbar gelagert, so dass der Verschlusshaken bei entsprechendem Antrieb mittels eines Antriebsmotors translatorisch und rotatorisch verlagert wird.

Aus Druckschrift DE 101 24 937 C1 ist eine Verriegelungsvorrichtung für ein Faltdach eines Fahrzeugs bekannt, die einen schwenkbar gelagerten Verriegelungshaken umfasst.

Aus Druckschrift AT 406 661 B ist eine Verschlussvorrichtung für ein Cabriolet-Verdeck bekannt, die ein Verschlusselement umfasst, das mittels eines Schließhebels in Eingriff- und Außereingriffstellung bezüglich eines Widerlagers gebracht werden kann. Der Schließhebel ist in einer Kulissenführung geführt und mittels eines Antriebsgestänges betätigbar.

Der Erfindung liegt die Aufgabe zugrunde, eine Verschlussvorrichtung der einleitend genannten Art mit einer optimierten Antriebseinrichtung zu schaffen.

Diese Aufgabe ist erfindungsgemäß durch die Verschlussvorrichtung mit den Merkmalen des Patentanspruchs 1 gelöst.

Erfindungsgemäß wird mithin vorgeschlagen, dass der Schlitten über eine Zuglenkeranordnung mit einem Antriebsende des Verschlusshakens verbunden ist. Die Zuglenkeranordnung ist also zwischen dem Verschlusshaken und dem Schlitten angeordnet, so dass ein Moment in den Verschlusshaken eingeleitet werden kann, das dessen Hakenende beim Verstellen aus einer Freigabestellung in eine Schließstellung nach oben drückt. Die Zuglenkeranordnung kann den Verschlusshaken auch in Querrichtung halten, so dass dieser keine Bewegungsfreiheit in Fahrzeugquerrichtung hat. Der Schlitten, der zweckmäßigerweise in einer Führungsschiene des Verschlussträgers geführt ist, hat nur einen Freiheitsgrad, der der Bewegung in der Führungsschiene entspricht.

Um zu gewährleisten, dass der Verschlusshaken stets eine definierte Schwenkstellung gegenüber dem Verschlussträger einnimmt, weist der Verschlussträger eine an einem Einsatz des Verschlussträgers angeordnete Führungsbahn für ein Führungselement auf, das an der Zuglenkeranordnung angeordnet oder an dem Verschlusshaken selbst angeordnet ist. Beim Verfahren des Schlittens in dem Verschlussträger wird damit das an der Zuglenkeranordnung angeordnete Führungselement in der verschlussträgerfesten Führungsbahn verfahren, so dass in definierter Weise das Hakenende des Verschlusshakens beim Verstellen desselben aus der Freigabestellung in die Sperrstellung nach oben gezogen wird. In entsprechender Weise wird das Hakenende des Verschlusshakens beim Verstellen desselben aus der Sperrstellung in die Freigabestellung nach unten gedrückt.

Da die Führungsbahn an einem Einsatz ausgebildet ist, lässt sich bei der Verschlussvorrichtung nach der Erfindung die Bewegungsbahn des Verschlusshakens bei Betätigen des Antriebsmotors durch Auswahl eines Einsatzes mit einer geeigneten Führungsbahn in einfacher Weise an die im speziellen Anwendungsfall bestehenden Anforderungen anpassen. Es lässt sich damit ein modulares System vorhalten, bei dem nur der Einsatz an die gestellten Anforderungen angepasst werden muss, die übrigen Bauelemente der Verschlussvorrichtung aber unverändert bleiben können.

Vorzugsweise ist der Einsatz der Verschlussvorrichtung nach der Erfindung in eine entsprechende Position in den Verschlussträger eingeschoben. Damit der Einsatz eine definierte Einbaulage einnimmt, ist er bei einer bevorzugten Ausführungsform der Verschlussvorrichtung nach der Erfindung durch Anschläge gegen ein Verschieben in Verfahrrichtung des Schlittens gesichert.

Bei einer speziellen Ausführungsform der Verschlussvorrichtung nach der Erfindung ist zumindest einer der Anschläge durch eine außen liegende Stufe des Einsatzes gebildet. Die Stufe liegt in Einbaulage an einem Gegenelement, beispielsweise an einer Stirnseite einer Rippe des Verschlussträgers an. Ein anderer Anschlag kann durch eine Stirnseite des Einsatzes gebildet sein, die an einer Wand des Verschlussträgers anliegt.

Um die Position des Einsatzes in dem Verschlussträger halten zu können, weist der Einsatz vorzugsweise Spannmittel auf, die ihn in dem Verschlussträger halten. Beispielsweise sind die Spannträger jeweils durch ein Federelement gebildet, das an einer oberen oder an einer unteren Begrenzungsfläche des Einsatzes einstückig ausgebildet ist. Das Federelement liegt insbesondere an einer Rippe oder einem Steg des Verschlussträgers an, so dass der Einsatz verspannt ist.

Zweckmäßigerweise ist der Einsatz ein austauschbares Kunststoffspritzgießteil. Sämtliche Elemente, wie die Anschläge und die Spannmittel, können damit in einstückiger Form an dem Einsatz ausgebildet sein.

Bei einer bevorzugten Ausführungsform der Verschlussvorrichtung nach der Erfindung ist der Verschlusshaken über einen Zapfen an dem Schlitten gelagert. Dadurch ist mit dem Schlitten, der Zuglenkeranordnung und dem Verschlusshaken eine Mehrgelenkanordnung realisiert, die die Verstellbewegung des Verschlusshakens führt.

Der Zapfen, über den der Verschlusshaken an dem Schlitten gelagert ist, kann in ein Langloch eingreifen. Das Langloch ist zweckmäßigerweise an dem Verschlusshaken ausgebildet. Denkbar ist es natürlich auch, den Zapfen an dem Verschlusshaken zu fixieren und das Langloch an dem Schlitten auszuformen. Die Schwenkachse des Verschlusshakens wandert bei dessen Verstellen in dem Langloch.

Anstelle der Langloch-/Zapfen-Verbindung könnte alternativ ein zusätzlicher Lenker zwischen dem Schlitten und dem Verschlusshaken vorgesehen sein.

Bei einer konstruktiv einfach umsetzbaren Verschlussvorrichtung nach der Erfindung ist die Zuglenkeranordnung aus einem Zuglenker oder einem Zuglenkerpaar gebildet, der bzw. das über einen ersten Gelenkpunkt an dem Verschlusshaken und über einen zweiten Gelenkpunkt an dem Schlitten gelagert ist. Die Zuglenkeranordnung besteht damit aus einem einzigen Zwischenhebel oder Zwischenhebelpaar, der bzw. das zwischen dem Verschlusshaken und dem Schlitten angeordnet ist.

Um den Verschlusshaken insbesondere auch klapperfrei in dem Verschlussträger halten zu können, ist der Verschlusshaken vorzugsweise mittels einer Haltefeder in Richtung seiner Sperrstellung vorgespannt.

Bei einer speziellen Ausführungsform der Verschlussvorrichtung nach der Erfindung wirkt die Haltefeder auf das dem Verschlusshaken zugeordnete Ende der Zuglenkeranordnung.

Ein Antriebsrad, das den Schlitten antreibt, kann insbesondere über eine Antriebslenkeranordnung mit dem Schlitten verbunden sein. Die Antriebslenkeranordnung kann in Verbindung mit dem Antriebsrad nach Art eines Kurbelantriebs ausgebildet sein und einen Koppellenker umfassen, der einerseits an das Antriebsrad und andererseits an den Schlitten angelenkt ist. Ein rotatorischer Antrieb des Antriebsrads führt zu einer translatorischen Verlagerung des Schlittens in oder an dem Verschlussträger.

Das Antriebsrad kann einen Anschlag haben, der mit Endanschlägen des Verschlussträgers zusammenwirkt. Die Endanschläge definieren die Freigabestellung und die Sperrstellung des Verschlusshakens.

Die Erfindung hat auch ein Verdeck eines Cabriolet-Fahrzeugs zum Gegenstand, umfassend eine Verschlussvorrichtung der vorstehend beschriebenen Art, mittels derer das Verdeck bzw. ein Verdeckelement an einem vorderen Windlauf des Fahrzeugs festgelegt werden kann. An dem vorderen Windlauf ist ein Verschlussgegenelement angeordnet, das zum Festlegen des Verdecks bzw. des Verdeckelements mit dem Haken- bzw. Greifende des Verschlusshakens zusammenwirkt. Das Verschlussgegenelement ist beispielsweise ein Bolzen, der von dem Verschlusshaken hintergriffen werden kann.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Verdecks mit einer Verschlussvorrichtung nach der Erfindung ist in der Zeichnung schematisch vereinfacht dargestellt und wird in der nachfolgenden Beschreibung näher erläutert. Es zeigt:
- Figur 1: eine schematische Seitenansicht eines Cabriolet-Fahrzeugs mit einem Verdeck, das mittels einer Verschlussvorrichtung an einem vorderen Windlauf festgelegt ist;
- Figur 2: eine perspektivische Draufsicht der Verschlussvorrichtung in deren Freigabestellung;
- Figur 3: eine perspektivische Draufsicht der Verschlussvorrichtung in deren Sperrstellung;
- Figur 4: eine Figur 2 entsprechende Darstellung der Verschlussvorrichtung in deren Freigabestellung, jedoch unter Ausblendung eines Verschlussträ-gers;
- Figur 5: eine Figur 3 entsprechende Darstellung der Verschlussvorrichtung, jedoch in deren Sperrstellung und unter Ausblendung des Verschlussträgers;
- Figur 6: eine Seitenansicht der Verschlussvorrichtung in deren Freigabestellung;
- Figur 7: eine Figur 6 entsprechende Seitenansicht der Verschlussvorrichtung in deren Sperrstellung;
- Figur 8: einen Längsschnitt der Verschlussvorrichtung entlang der Linie VIII-VIII in Figur 19 in deren Freigabestellung;
- Figur 9: einen Figur 8 entsprechenden Längsschnitt durch die Verschlussvorrichtung entlang der Linie IX-IX in Figur 20, jedoch in deren Sperrstellung;
- Figur 10: eine Seitenansicht der Verschlussvorrichtung in deren Freigabestellung, jedoch unter Ausblendung des Verschlussträgers;
- Figur 11: eine Figur 10 entsprechende Seitenansicht der Verschlussvorrichtung, jedoch in deren Sperrstellung;
- Figur 12: einen weiteren Längsschnitt durch die Verschluss vorrichtung entlang der Linie XII-XII in Figur 19, in deren Freigabestellung;
- Figur 13: einen Figur 12 entsprechenden Längsschnitt entlang der Linie XIII-XIII in Figur 20, in deren Sperrstellung;
- Figur 14: eine Seitenansicht eines Verschlusshakens, einer Zuglenkeranordnung und eines Schlittens sowie einer Führungsbahn für die Zuglenkeranordnung der Verschlussvorrichtung in deren Freigabestellung, jedoch unter Ausblendung des Verschlussträgers;
- Figur 15: eine Figur 14 entsprechende Seitenansicht, jedoch in der Sperrstellung der Verschlussvorrichtung;
- Figur 16: eine perspektivische Heckansicht des Verschlusshakens, der Zuglenker-anordnung, des Schlittens und eines Einsatzes, an dem die Führungsbahn ausgebildet ist;
- Figur 17: einen Längsschnitt durch die Verschlussvorrichtung entlang der Linie XVII-XVII in Figur 19;

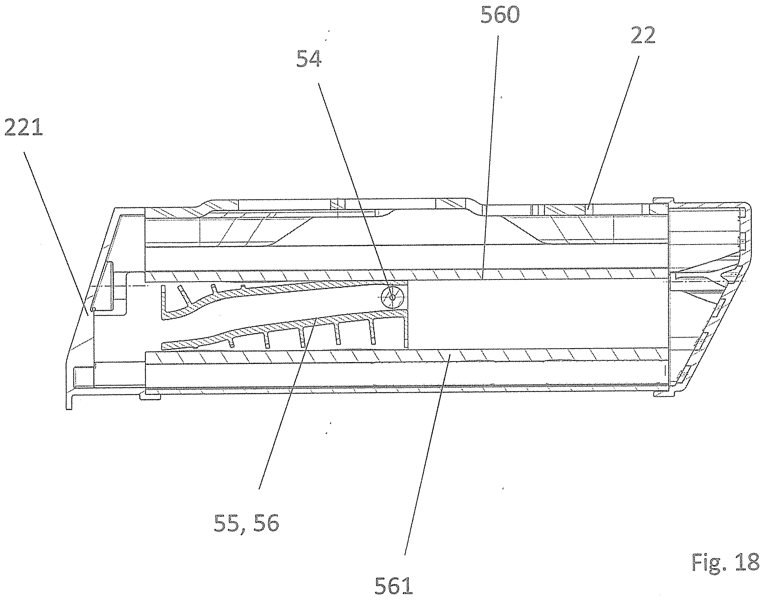

- Figur 18: einen Figur 8 entsprechenden Längsschnitt durch die Verschlussvorrichtung, jedoch ohne Darstellung von Kinematikelementen;
- Figur 19: eine Draufsicht auf die Verschlussvorrichtung in deren Freigabestellung;
- Figur 20: eine Figur 19 entsprechende Ansicht, jedoch in der Sperrstellung der Verschlussvorrichtung;
- Figur 21: eine Draufsicht der Verschlussvorrichtung in deren Freigabestellung unter Ausblendung des Verschlussträgers; und
- Figur 22: eine Figur 21 entsprechende Ansicht der Verschlussvorrichtung, jedoch in deren Sperrstellung.

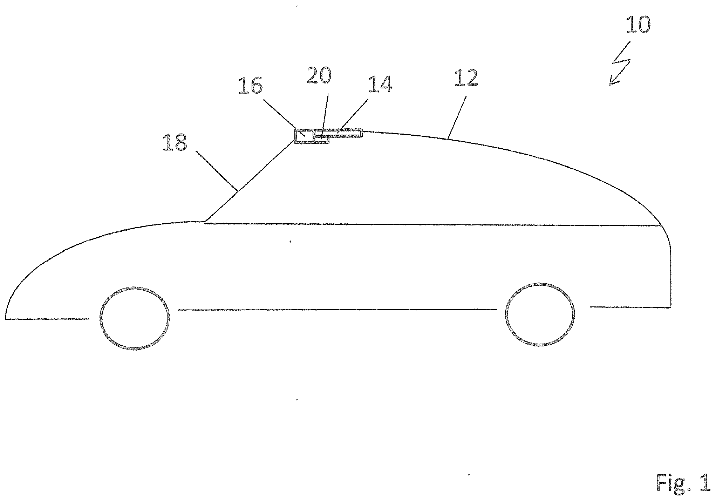

In Figur 1 ist ein Cabriolet-Fahrzeug. 10 dargestellt, das ein Faltverdeck 12 aufweist, welches zwischen einer einen Fahrzeuginnenraum überspannenden Schließstellung und einer den Fahrzeuginnenraum nach oben freigebenden Ablagestellung verstellbar ist. In der in Figur 1 dargestellten Schließstellung ist das Faltverdeck 12 mit einem Frontspriegel 14 an einem vorderen Windlauf 16 des Fahrzeugs 10 festgelegt, der einen oberen, sich in Fahrzeugquerrichtung erstreckenden Rahmenschenkel eines Rahmens einer Windschutzscheibe 18 darstellt.

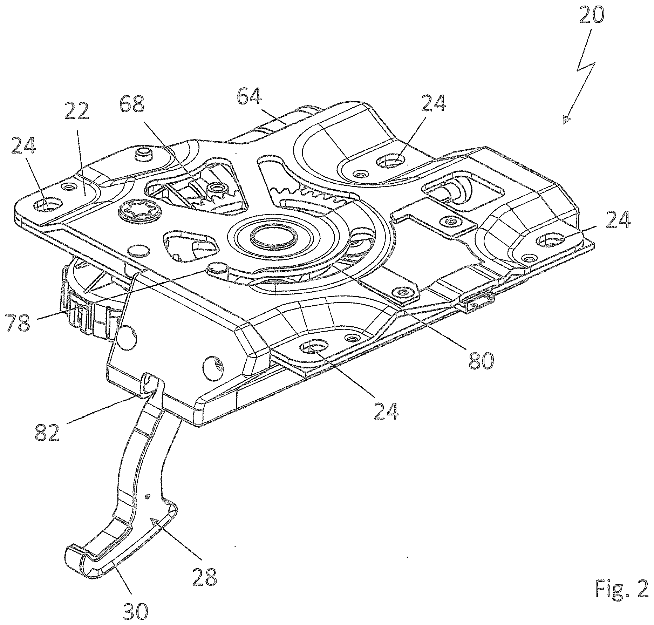

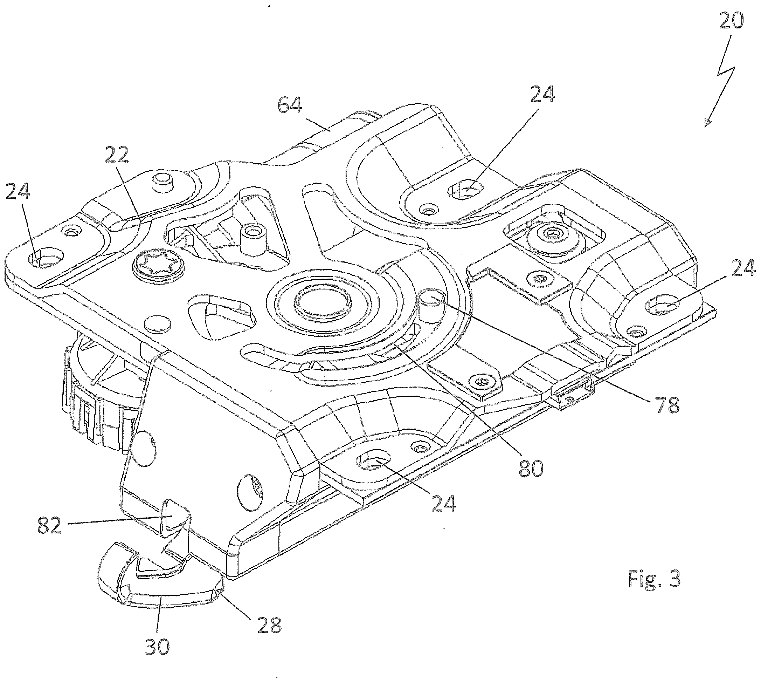

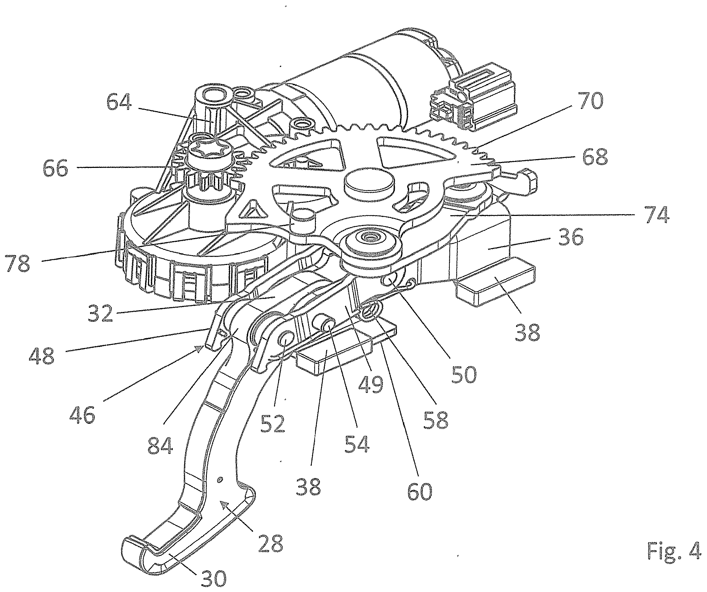

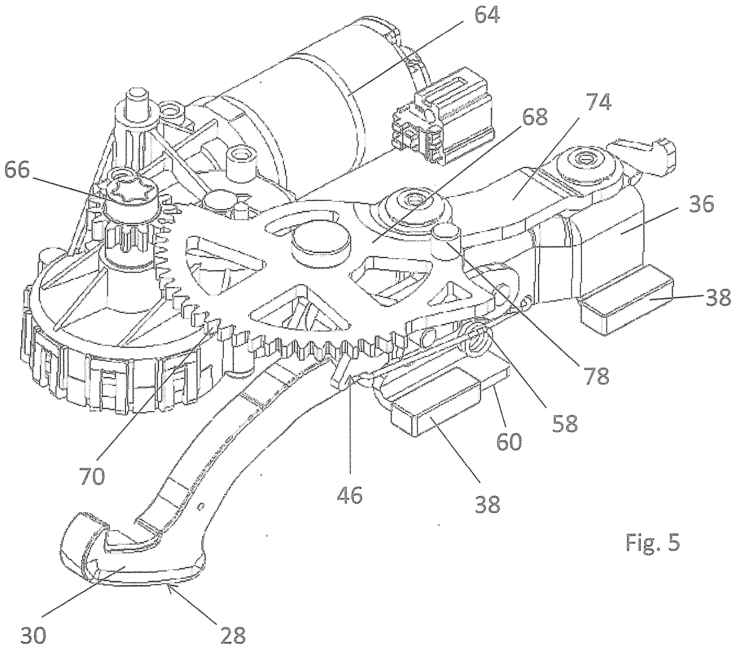

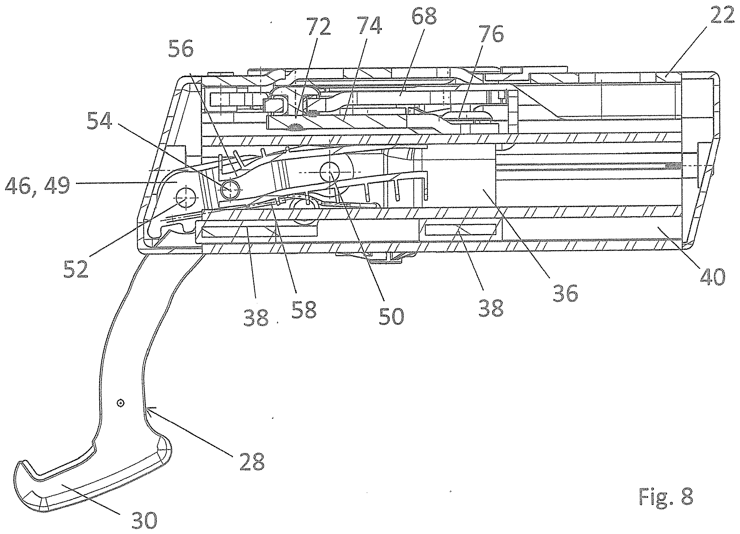

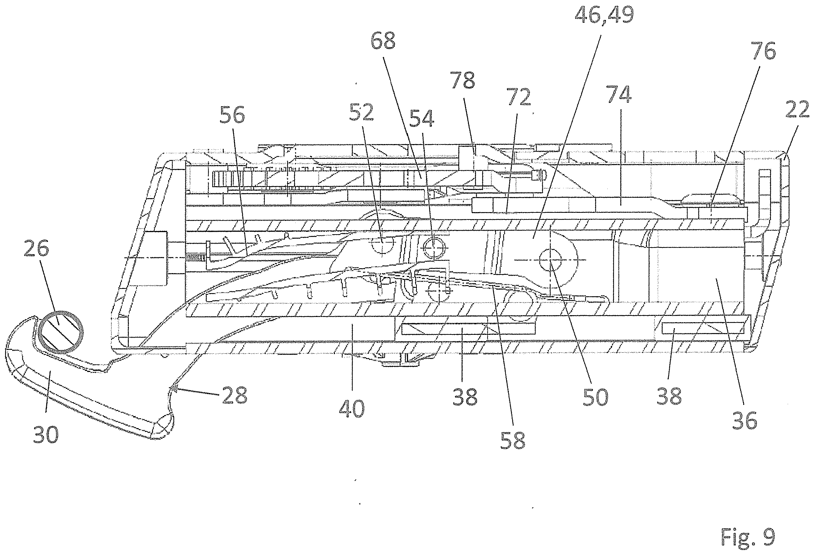

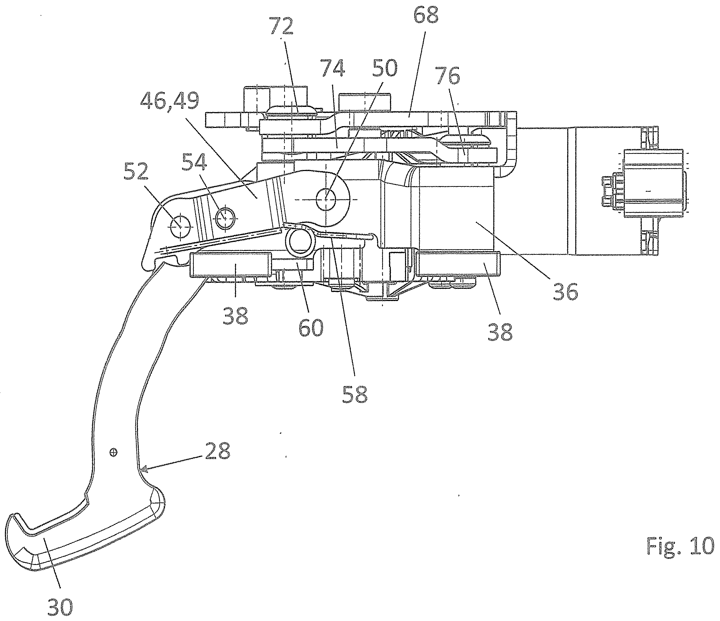

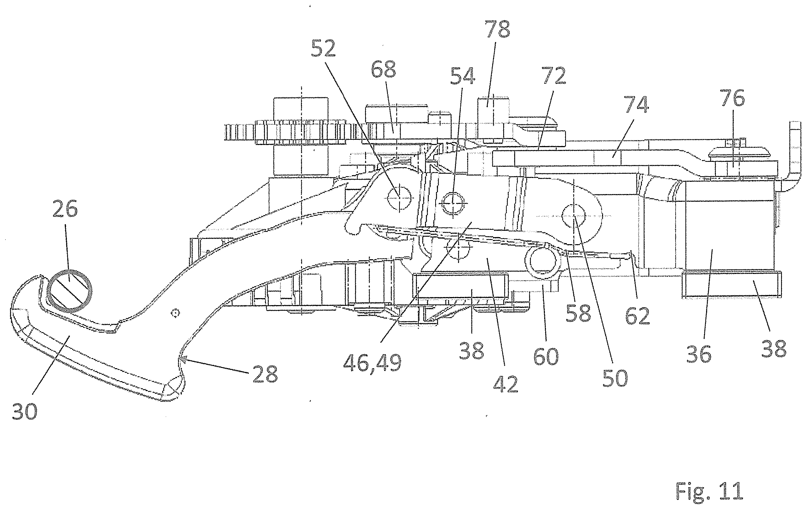

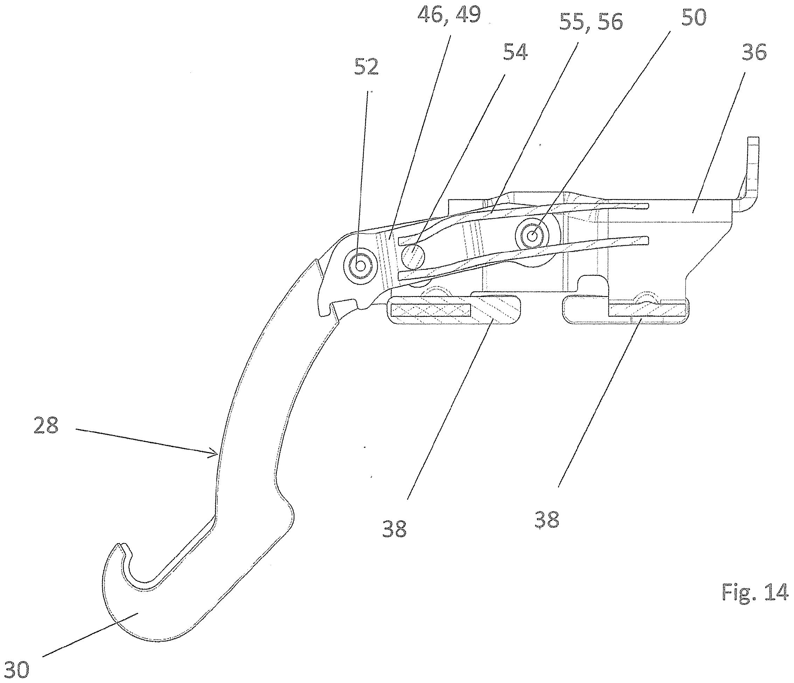

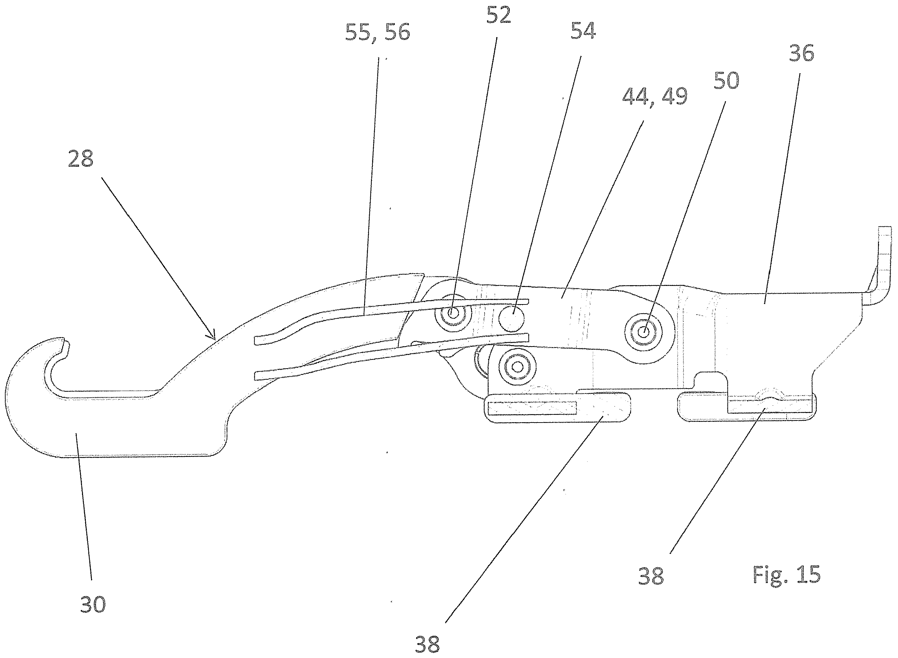

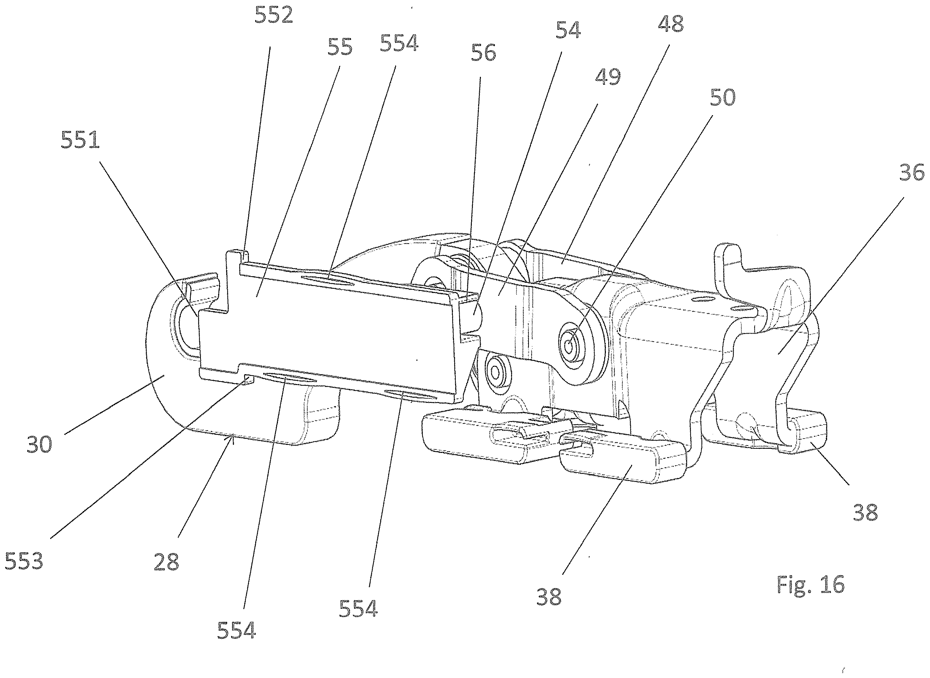

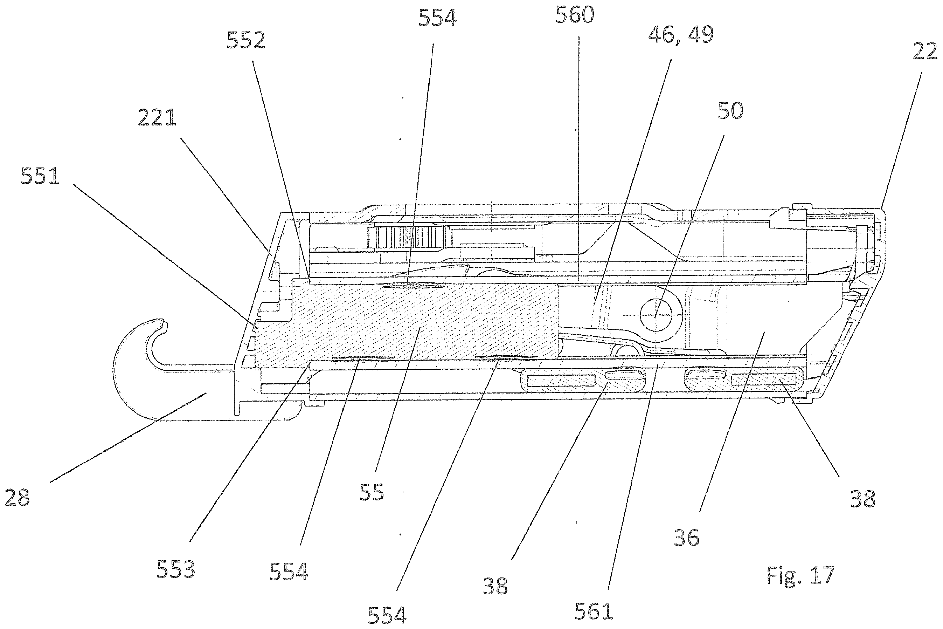

Die Schließstellung des Faltverdecks 12 ist mittels einer Verschlussvorrichtung 20 gesichert, die an der Unterseite des Frontspriegels 14 angeordnet ist und in den Figuren 2 bis 17 in Alleinstellung dargestellt ist. In der gesicherten Stellung nimmt die Verschlussvorrichtung 20 ihre Sperrstellung ein, wohingegen zum Verstellen des Faltverdecks 12 die Verschlussvorrichtung 20 in ihre Freigabestellung gebracht bzw. verstellt wird.

Die Verschlussvorrichtung 20 umfasst einen Verschlussträger 22, welcher zur Fixierung an dem Frontspriegel Schraubenlöcher 24 aufweist und an dem die weiteren Bestandteile der Verschlussvorrichtung 20 gelagert bzw. befestigt sind und diese zumindest teilweise aufnimmt. Der Verschlussträger 22, der einen Deckel und einen Boden hat, bildet also ein Gehäuse der Verschlussvorrichtung 20.

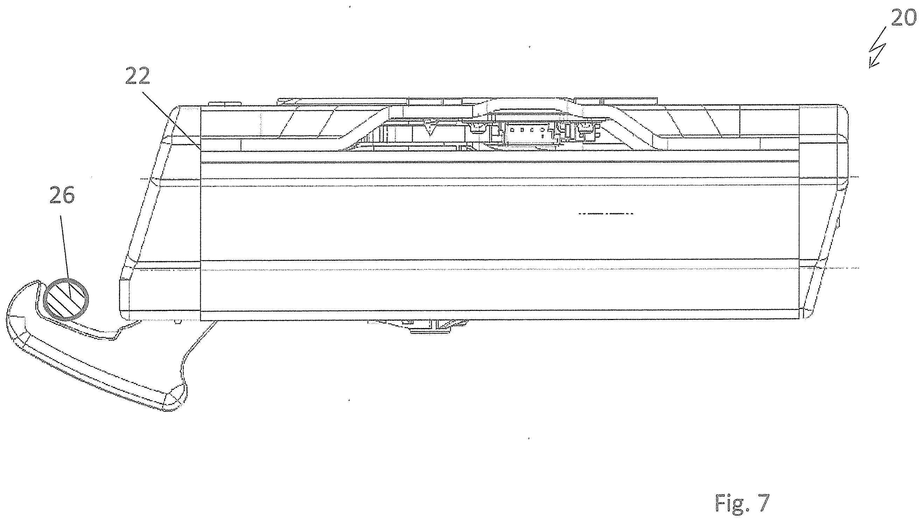

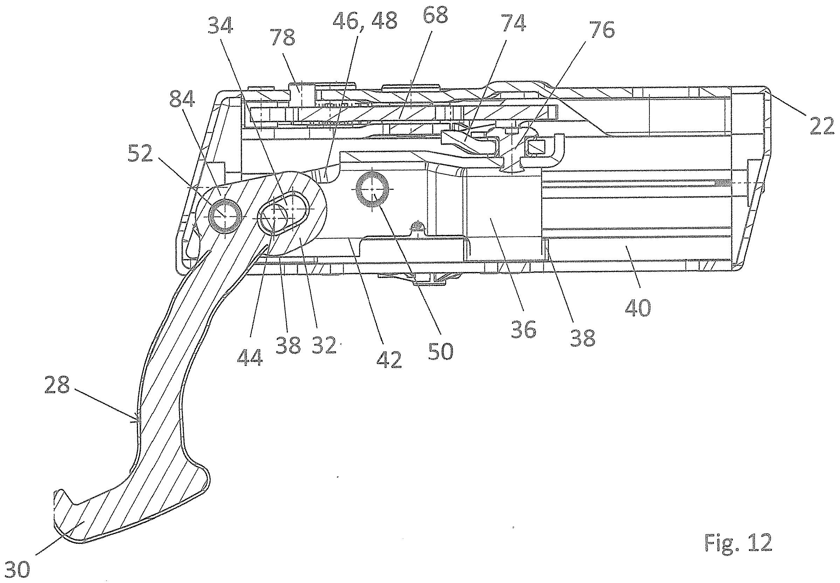

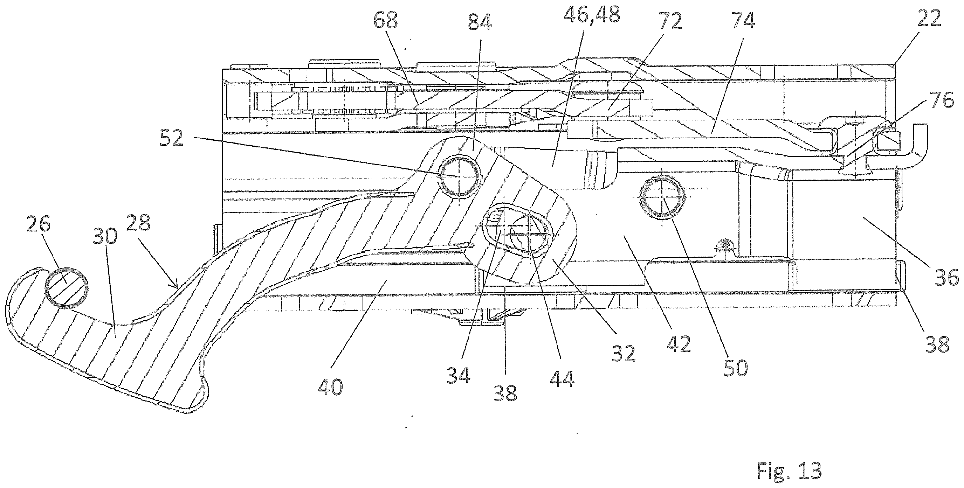

Zum Eingriff mit einem Verschlussbolzen 26, der an dem vorderen Windlauf 16 des Fahrzeugaufbaus angeordnet ist und der in den Figuren 7, 9 und 11 dargestellt ist, umfasst die Verschlussvorrichtung 20 einen Verschlusshaken 28. Dieser hat einen vorderen Hakenabschnitt 30, welcher in der Sperrstellung den Verschlussbolzen 26 des vorderen Windlaufs 16 hintergreift, und einen hinteren Lagerabschnitt 32, in dem ein Langloch 34 ausgebildet ist (vgl. Figuren 12 und 13).

Zum Antrieb ist der Verschlusshaken 28 mit einem Schlitten 36 verbunden, der bezogen auf eine vertikale Verschlusshakenlängsmittelebene beidseits jeweils zwei Gleitfüße 38 aufweist, die in einer Führungsbahn 40 des Verschlussträgers 22 geführt sind.

Der Schlitten 36 hat zwei seitliche Wangen 42, zwischen denen der hintere Lagerabschnitt 32 des Verschlusshakens 28 angeordnet ist und die über einen Zapfen 44 miteinander verbunden sind, der das Langloch 34 des Verschlusshakens 28 durchgreift.

Zwischen dem Schlitten 36 und dem Verschlusshaken 28 ist eine Zuglenkeranordnung 46 angeordnet, die aus zwei Zuglenkern 48 und 49 gebildet ist, zwischen denen ein vorderes Ende des Schlittens 36 und der hintere Lagerabschnitt 32 und ein Antriebsabschnitt 84 des Verschlusshakens 28 angeordnet sind. Die Zuglenker 48 sind jeweils über einen hinteren Gelenkpunkt 50, der von einem Bolzen gebildet ist, der den Schlitten 36 durchgreift, an dem Schlitten 36 angelenkt. An ihren vorderen Enden sind die Zuglenker 48 über einen durch einen Zapfen definierten Gelenkpunkt 52 an den Antriebsabschnitt 84 des Verschlusshakens 28 angelenkt.

Der Zuglenker 49 trägt an seiner Außenseite ein zapfenartiges Führungselement 54, das in einer Führungs- bzw. Kulissenbahn 56 geführt ist, die an der Innenseite des Verschlussträgers 22 angeordnet ist und an einem Einsatz 55 des Verschlussträgers 22 angeordnet ist. Der Einsatz 55 ist austauschbar ausgeführt, so dass die Führungsbahn 56 modular an unterschiedliche Verdecksysteme angepasst werden kann. Sie legt eine obere und eine untere Verfahrkurvenbegrenzung fest.

Der Einsatz 55, der die Führungsbahn 56 begrenzende Rippen hat, weist an seiner Oberseite und an seiner Unterseite jeweils einen als Stufe ausgebildeten Anschlag 552 bzw. 553 auf, der an einer Stirnseite einer jeweiligen Führungsrippe 560 bzw. 561 anliegt. Der Einsatz 55 ist zwischen den beiden Führungsrippen 560 und 561 aufgenommen. Zudem bildet eine Stirnseite des Einsatzes 55 einen weiteren Anschlag 551, der in Einbaulage an einer Außenwand 221 des Verschlussträgers 22 anliegt. Die Anschläge 551, 552 und 553 sichern den Einsatz 55 gegen ein Verschieben in eine Verfahrrichtung des Schlittens 36.

Des Weiteren ist an der Oberseite des Einsatzes 55 ein Spannmittel 554 ausgebildet und sind an der Unterseite des Einsatzes 55 zwei Spannmittel 554 ausgebildet. Die Spannmittel 554 bilden jeweils ein als Blattfeder ausgebildetes Federelement, das auf die jeweilige Führungsrippe 560 bzw. 561 des Verschlussträgers 22 drückt und so den Einsatz 55 in Position hält bzw. diesen zwischen den Führungsrippen 560 und 561 verspannt. Der Einsatz 55 ist ein Kunststoffspritzgießteil und definiert durch die Auslegung der an ihm ausgebildeten Führungsbahn 56 die Bewegungsbahn des Verschlusshakens 28 bei einem Verfahren des Schlittens 36.

Um den Verschlusshaken 28 in Richtung seiner Sperrstellung vorzuspannen, weist die Verschlussvorrichtung 20 eine Schenkelfeder 58 auf, die auf einem Vorsprung 60 des Schlittens 36 aufliegt, der an dem Schlitten 36 ausgebildet ist, und mit einem Schenkel in eine Kerbe 62 des Schlittens 36 eingreift und mit einem zweiten Schenkel am bugseitigen Ende in etwa unterhalb des Gelenkpunkts 52 an dem Zuglenker 48 anliegt und diesen nach oben drückt.

An der Unterseite des mehrteilig aufgebauten, gehäuseartigen Verschlussträgers 22 ist ein Antriebsmotor 64 angeordnet, der ein Antriebsritzel 66 antreibt. Das Antriebsritzel 66 steht mit einem Antriebsrad 68 in Eingriff, das um eine Achse A drehbar ist und über einen Winkel von etwa 120° bis 160° eine Verzahnung 70 hat, die mit der Verzahnung des Antriebsritzels 66 in Eingriff steht. Das Antriebsrad 68 hat ein Gelenkauge 72, über das ein Koppellenker 74 angelenkt ist, welcher mit seinem dem Antriebsrad 68 abgewandten Ende über ein Gelenk 76 an der Oberseite des Schlittens 36 angelenkt ist.

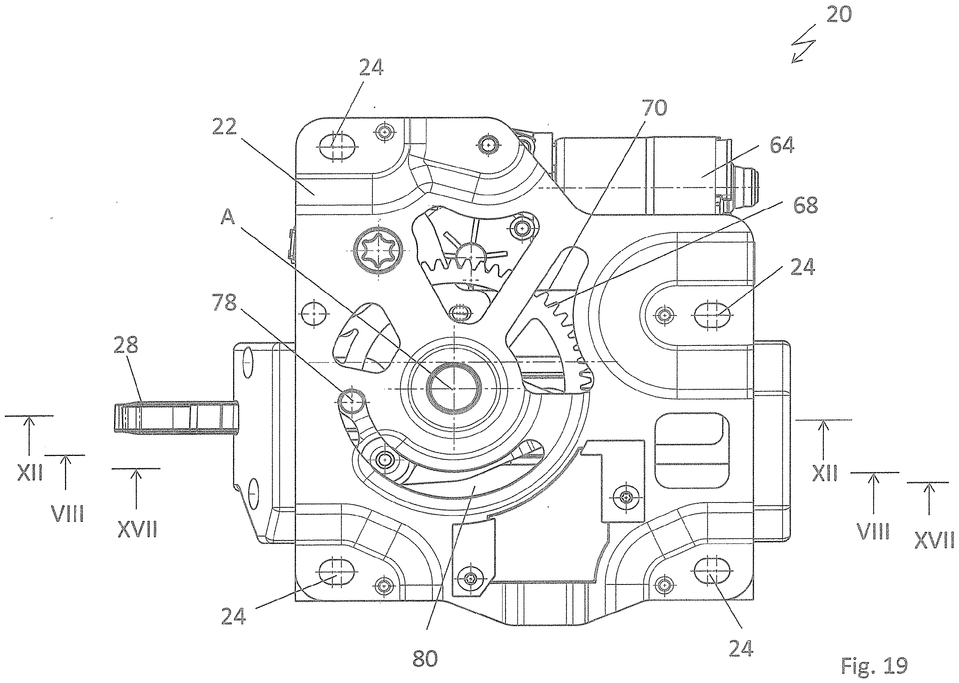

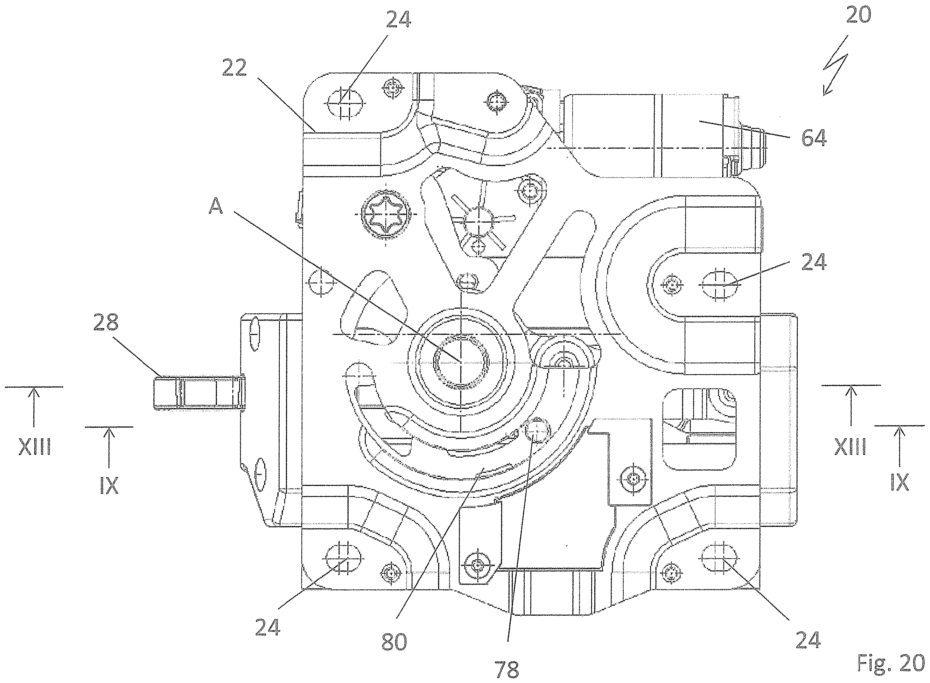

Das Antriebsrad 68 trägt an seiner Oberseite einen Anschlagzapfen 78, der bei einer Drehung des Antriebsrads um die Achse A in einer Kulissenbahn 80 geführt ist, die bezüglich der Achse A einen konzentrischen Verlauf hat und an dem Gehäuse bzw. dem Verschlussträger 22 ausgeformt ist. Die Ränder der Kulissenbahn 80 in Umfangsrichtung bilden jeweils einen Gegenanschlag für den Anschlagzapfen 78, so dass einerseits die Freigabestellung des Verschlusshakens 28 (vgl. Figur 19) und andererseits die Schließstellung des Verschlusshakens 28 definiert ist (vgl. Figur 20).

Die Betätigung der vorstehend beschriebenen Verschlussvorrichtung 20 erfolgt in nachfolgend beschriebener Weise.

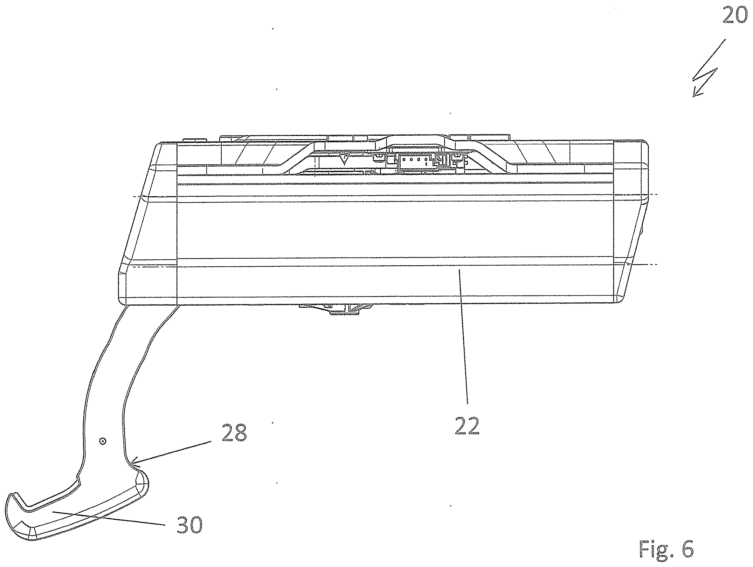

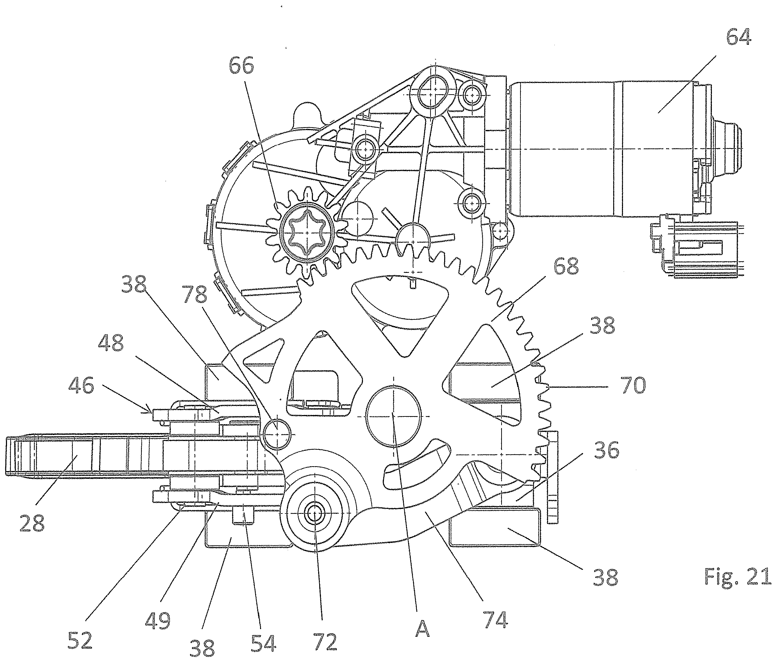

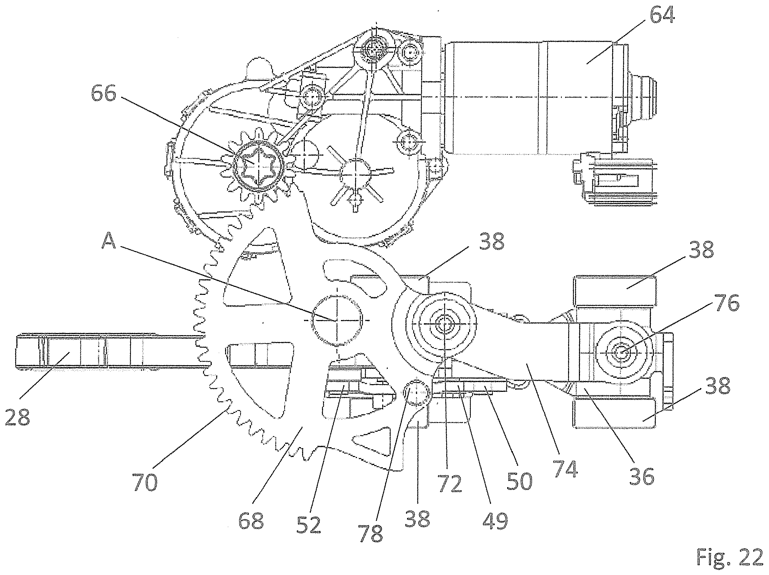

Ausgehend von der beispielsweise in Figur 19 dargestellten Freigabestellung der Verschlussvorrichtung 20 wird der Antriebsmotor 64 derart betätigt, dass das Antriebsrad 68 bezogen auf die in den Figuren 19 bis 22 dargestellte Ausrichtung im Gegenuhrzeigersinn um die Achse A gedreht wird. Dadurch wird von dem Antriebsrad 68 über den Koppellenker 74 eine Schubkraft auf den Schlitten 36 ausgeübt, wodurch über die Zuglenker 48 eine Zugkraft auf den Verschlusshaken 28 ausgeübt wird. Der Verschlusshaken 28 wird damit durch einen stirnseitigen und unterseitigen Schlitz 82 in den Verschlussträger 22 gezogen und gleichzeitig bezogen auf die Orientierung in den Figuren 6 bis 13 im Uhrzeigersinn verschwenkt, und zwar um eine mit dem Zapfen 44 in dem Langloch wandernde Schwenkachse. Die Schwenkbewegung wird ausgelöst durch die Zugkraft der Zuglenker 48 auf den Antriebsabschnitt 84 des Verschlusshakens 28, in dem der Gelenkpunkt 52 ausgebildet ist und der gegenüber einer Verbindungslinie zwischen dem Lagerabschnitt 32 und dem Hakenabschnitt 30 des Verschlusshakens 28 versetzt ist. Zudem wird die Schwenkbewegung durch das Führungselement 54 gesteuert, die in der Führungsbahn 56 geführt ist.

Beim Verstellen des Verschlusshakens greift der Hakenabschnitt 30 in eine an dem vorderen Windlauf 16 ausgebildete Aufnahme ein, so dass bei Kontakt mit dem Verschlussbolzen 26 auf den Frontspriegel 14 eine Gegenkraft wirkt, die diesen nach unten zieht. Dies ist hilfreich, da der Frontspriegel 14 in der Regel bedingt durch äußere Krafteinflüsse das Bestreben hat, eine höhere Position einzunehmen, als diejenige der Nominalposition. Dieses Bestreben kann auf einer Spannung eines Verdeckbezugs oder auf einem Unterdruck während des Schließens im Fahrbetrieb beruhen.

### Bezugszeichenliste

- 10: Cabriolet-Fahrzeug
- 12: Faltverdeck
- 14: Frontspriegel
- 16: vorderer Windlauf
- 18: Windschutzscheibe
- 20: Verschlussvorrichtung
- 22: Verschlussträger
- 24: Schraubenlöcher
- 26: Verschlussbolzen
- 28: Verschlusshaken
- 30: vorderer Hakenabschnitt
- 32: hinterer Lagerabschnitt
- 34: Langloch
- 36: Schlitten
- 38: Gleitfuß
- 40: Führungsbahn
- 42: Wange
- 44: Zapfen
- 46: Zuglenkeranordnung
- 48: Zuglenker
- 49: Zuglenker
- 50: Gelenkpunkt
- 52: Gelenkpunkt
- 54: Führungselement
- 55: Einsatz
- 56: Führungsbahn
- 58: Schenkelfeder
- 60: Vorsprung
- 62: Kerbe
- 64: Antriebsmotor
- 66: Antriebsritzel
- 68: Antriebsrad
- 70: Verzahnung
- 72: Gelenkauge
- 74: Koppellenker
- 76: Gelenk
- 78: Anschlagzapfen
- 80: Kulissenbahn
- 82: Schlitz
- 84: Antriebsabschnitt
- 221: Außenwand
- 551: Anschlag
- 552: Anschlag
- 553: Anschlag
- 554: Spannmittel
- 560: Führungsrippen
- 561: Führungsrippen

## Patentansprüche

1. Verschlussvorrichtung eines Cabriolet-Verdecks, umfassend einen Verschlussträger (22), einen Verschlusshaken (28), der zum Verstellen zwischen einer Freigabestellung und einer Sperrstellung translatorisch und rotatorisch verlagerbar ist, und eine Antriebseinrichtung für den Verschlusshaken (28), die einen Antriebsmotor (64) umfasst und einen an dem Verschlussträger (22) verfahrbaren Schlitten (36) antreibt, wobei der Schlitten (36) über eine Zuglenkeranordnung (46), die aus mindestens einem Zuglenker (48) gebildet ist, der über einen ersten Gelenkpunkt (52) an dem Verschlusshaken (28) und über einen zweiten Gelenkpunkt (50) an dem Schlitten (36) gelagert ist mit einem Antriebsabschnitt (84) des Verschlusshakens (28) verbunden ist, so dass der Verschlusshaken (28) bei einem Verfahren des Schlittens (36) eine Schwenkbewegung erfährt, und wobei der Verschlussträger (22) einen Einsatz mit einer Führungsbahn (56) für ein Führungselement (54) aufweist, das an der Zuglenkeranordnung (46) oder dem Verschlusshaken angeordnet ist, und die Führungsbahn (56) eine Schwenkstellung des Verschlusshakens (28) gegenüber dem Verschlussträger (22) vorgibt.

2. Verschlussvorrichtung nach Anspruch 1, **dadurch gekennzeichnet, dass** der Einsatz (55) durch Anschläge (551, 552, 553) gegen ein Verschieben in eine Verfahrrichtung des Schlittens (36) gesichert ist.

3. Verschlussvorrichtung nach Anspruch 2, **dadurch gekennzeichnet, dass** zumindest einer der Anschläge (552, 553) durch eine außen liegende Stufe des Einsatzes (55) gebildet ist.

4. Verschlussvorrichtung nach einem der Ansprüche 1 bis 3, **dadurch gekennzeichnet, dass** der Einsatz (55) Spannmittel (554) umfasst, die ihn in dem Verschlussträger (22) halten.

5. Verschlussvorrichtung nach Anspruch 4, **dadurch gekennzeichnet, dass** die Spannmittel (554) jeweils durch ein Federelement gebildet sind, das an einer oberen oder an einer unteren Begrenzungsfläche des Einsatzes (55) einstückig ausgebildet ist.

6. Verschlussvorrichtung nach einem der Ansprüche 1 bis 5, **dadurch gekennzeichnet, dass** der Einsatz (55) ein austauschbares Kunststoffspritzgießteil ist.

7. Verschlussvorrichtung nach einem der Ansprüche 1 bis 6, **dadurch gekennzeichnet, dass** der Verschlusshaken (28) über einen Zapfen (44) an dem Schlitten (36) gelagert ist.

8. Verschlussvorrichtung nach Anspruch 7, **dadurch gekennzeichnet, dass** der Zapfen (44) in ein Langloch (34) eingreift.

9. Verschlussvorrichtung nach einem der Ansprüche 1 bis 8, **dadurch gekennzeichnet, dass** der Verschlusshaken (28) mittels einer Haltefeder in Richtung seiner Sperrstellung vorgespannt ist.

10. Verschlussvorrichtung nach Anspruch 9, **dadurch gekennzeichnet, dass** die Haltefeder auf ein dem Verschlusshaken (28) zugeordnetes Ende der Zuglenkeranordnung (46) wirkt.

11. Verschlussvorrichtung nach einem der Ansprüche 1 bis 10, **dadurch gekennzeichnet, dass** das Antriebsrad (68) über eine Koppellenkeranordnung mit dem Schlitten (36) verbunden ist.

12. Verschlussvorrichtung nach einem der Ansprüche 1 bis 11, **dadurch gekennzeichnet, dass** das Antriebsrad (68) einen Anschlag hat, der mit Endanschlägen des Verschlussträgers (22) zusammenwirkt.

13. Verdeck eines Cabriolet-Fahrzeugs, umfassend eine Verschlussvorrichtung nach einem der Ansprüche 1 bis 12 zur Festlegung eines Verdeckelements an einem vorderen Windlauf des Fahrzeugs.

## Claims

1. A locking device of a top of a convertible vehicle, the locking device comprising a locking support (22), a locking hook (28), which can be shifted in a translational and rotational manner so as to be displaced between a release position and a locked position, and a driving mechanism for the locking hook (28), said driving mechanism comprising a driving motor (64) and driving a slide (36) movable on the locking support (22), wherein the slide (36) is connected to a driving section (84) of the locking hook (28) via a pull-link arrangement (46) in such a manner that the locking hook (28) undergoes a pivoting movement when the slide (36) is moved, the pull-link arrangement (46) being composed of at least one pull link (48), which is mounted on the locking hook (28) via a first hinge point (52) and on the slide (36) via a second hinge point (50), and wherein the locking support (22) has an insert (55) having a guiding track (56) for a guiding element (54) which is arranged on the pull-link arrangement (46) or on the locking hook, and wherein the guiding track (56) defines a pivot position of the locking hook (28) with respect to the locking support (22).

2. The locking device according to claim 1, **characterized in that** the insert (55) is secured against being moved in a moving direction of the slide (36) by stops (551, 552, 5 53).

3. The locking device according to claim 2, **characterized in that** at least one of the stops (552, 553) is formed by an outer step of the insert (55).

4. The locking device according to any one of claims 1 to 3, **characterized in that** the insert (55) comprises restraining means (554) that retain it inside the locking support (22).

5. The locking device according to claim 4, **characterized in that** each restraining means (554) is formed by a spring element that is formed integrally on an upper boundary surface or on a lower boundary surface of the insert (55).

6. The locking device according to any one of claims 1 to 5, **characterized in that** the insert (55) is an exchangeable plastic injection-molded part.

7. The locking device according to any one of claims 1 to 6, **characterized in that** the locking hook (28) is mounted on the slide (36) via a journal (44).

8. The locking device according to claim 7, **characterized in that** the journal (44) engages into an oblong hole (34).

9. The locking device according to any one of claims 1 to 8, **characterized in that** the locking hook (28) is pre-loaded in the direction of its locked position by means of a retaining spring.

10. The locking device according to claim 9, **characterized in that** the retaining spring acts on an end of the pull-link arrangement (46) that is associated with the locking hook (28).

11. The locking device according to any one of claims 1 to 10, **characterized in that** the driving wheel (68) is connected to the slide (36) via a coupling-link arrangement.

12. The locking device according to any one of claims 1 to 11, **characterized in that** the driving wheel (68) has a stop which interacts with end stops of the locking support (22).

13. A top of a convertible vehicle, the top comprising a locking device according to any one of claims 1 to 12 for fixing a top element to a front cowl of the vehicle.

## Revendications

1. Dispositif de verrouillage d'une capote cabriolet, le dispositif de verrouillage comprenant un support de verrouillage (22), un crochet de verrouillage (28), qui est déplaçable en translation et en rotation afin d'être décalé entre une position de déverrouillage et une position de verrouillage, et un mécanisme d'entraînement pour le crochet de verrouillage (28), ledit mécanisme d'entraînement comprenant un moteur d'entraînement (64) et entraînant un coulisseau (36) déplaçable sur le support de verrouillage (22), dans lequel le coulisseau (36) est relié avec une partie d'entraînement (84) du crochet de verrouillage (28) par l'intermédiaire d'un ensemble (46) de bielle de traction de telle manière que le crochet de verrouillage (28) effectue un mouvement pivotant quand le coulisseau (36) est déplacé, l'ensemble (46) de bielle de traction étant composé d'au moins une bielle de traction (48), qui est supportée sur le crochet de verrouillage (28) par l'intermédiaire d'un premier point d'articulation (52) et sur le coulisseau (36) par l'intermédiaire d'un deuxième point d'articulation (50), et dans lequel le support de verrouillage (22) a un insert (55) ayant une glissière (56) pour un élément de guidage (54) qui est disposé sur l'ensemble (46) de bielle de traction ou sur le crochet de verrouillage, et dans lequel la glissière (56) définit une position pivotée du crochet de verrouillage (28) par rapport au support de verrouillage (22).

2. Dispositif de verrouillage selon la revendication 1, **caractérisé en ce que** l'insert (55) est empêché d'être déplacé dans une direction de déplacement du coulisseau (36) par des butées (551, 552, 5 53).

3. Dispositif de verrouillage selon la revendication 2, **caractérisé en ce qu'**au moins une des butées (552, 553) est formée par un gradin extérieur de l'insert (55).

4. Dispositif de verrouillage selon l'une quelconque des revendications 1 à 3, **caractérisé en ce que** l'insert (55) comprend des moyens de serrage (554) qui retiennent l'insert dans le support de verrouillage (22).

5. Dispositif de verrouillage selon la revendication 4, **caractérisé en ce que** chaque moyen de serrage (554) est formé par un élément de ressort qui est intégralement formé sur une surface de délimitation supérieure ou sur une surface de délimitation inférieure de l'insert (55).

6. Dispositif de verrouillage selon l'une quelconque des revendications 1 à 5, **caractérisé en ce que** l'insert (55) est une pièce échangeable en matière plastique moulé par injection.

7. Dispositif de verrouillage selon l'une quelconque des revendications 1 à 6, **caractérisé en ce que** le crochet de verrouillage (28) est supporté sur le coulisseau (36) par l'intermédiaire d'un tourillon (44).

8. Dispositif de verrouillage selon la revendication 7, **caractérisé en ce que** le tourillon (44) pénètre un trou oblong (34).

9. Dispositif de verrouillage selon l'une quelconque des revendications 1 à 8, **caractérisé en ce que** le crochet de verrouillage (28) est précontraint dans la direction de son position de verrouillage au moyen d'un ressort de retenue.

10. Dispositif de verrouillage selon la revendication 9, **caractérisé en ce que** le ressort de retenue agit sur une extrémité de l'ensemble (46) de bielle de traction qui est associée au crochet de verrouillage (28).

11. Dispositif de verrouillage selon l'une quelconque des revendications 1 à 10, **caractérisé en ce que** la roue d'entraînement (68) est reliée avec le coulisseau (36) par l'intermédiaire d'un ensemble de bielle d'accouplement.

12. Dispositif de verrouillage selon l'une quelconque des revendications 1 à 11, **caractérisé en ce que** la roue d'entraînement (68) a une butée qui interagit avec des butées d'extrémité du support de verrouillage (22).

13. Capote d'un véhicule cabriolet, la capote comprenant un dispositif de verrouillage selon l'une quelconque des revendications 1 à 12 destiné à fixer un élément de capote sur une baie avant du véhicule.
